# EUROPEAN PATENT APPLICATION

(11) **EP 4 257 625 A1**
(43) Date of publication of application: **11.10.2023**
(21) Application number: 22167059.9
(22) Date of filing: 07.04.2022
(51) Int. Cl.: C08G 18/18, C08G 18/22, C08G 18/40, C08G 18/42, C08G 18/48, C08G 18/50, C08G 18/76

(54) **HCFO-CONTAINING ISOCYANATE-REACTIVE COMPOSITIONS, RELATED FOAM-FORMING COMPOSITIONS AND FOAMS**

(71) Applicant: Covestro LLC, Pittsburgh, PA 15205-9741 (US); Covestro Deutschland AG, 51373 Leverkusen (DE)
(72) Inventor: The designation of the inventor has not yet been filed
(74) Representative: Levpat

(57) **Abstract**

Disclosed are HCFO-containing isocyanate-reactive compositions that include a tertiary amine oxide catalyst. Also described are foam-forming compositions containing such isocyanate-reactive compositions, rigid foams made using such foam-forming compositions, and methods for producing such foams, including use of such foams as insulation in discontinuous foam panel applications. The isocyanate-reactive composition can exhibit a long shelf life, be shelf-stable, and produce foam with good physical properties.

## Description

### FIELD

This specification pertains generally to hydrochlorofluoroolefin ("HCFO")-containing isocyanate-reactive compositions, foam-forming compositions containing such isocyanate-reactive compositions, rigid foams made using such foam-forming compositions, and methods for producing such foams, including use of such foams as panel insulation.

### BACKGROUND

Closed-cell rigid polyurethane foams are used in numerous industries. They are produced by reacting a polyisocyanate and an isocyanate-reactive compound, usually a polyol, in the presence of a blowing agent and catalysts. Such foams are often used as a thermal insulation medium in the construction of refrigerated storage devices and in the construction of panel assemblies, such as doors, including garage doors. The thermal insulating properties of closed-cell rigid foams are dependent upon a number of factors, including the average cell size and the thermal conductivity of the contents of the cells.

Chlorofluorocarbons (CFC's) and hydrogen-containing chlorofluorocarbons (HCFC's) have been used as blowing agents to produce these foams because of their exceptionally low vapor thermal conductivity. However, their ozone-depletion potential is a drawback to their use. Alternative blowing agents, such as hydrofluorocarbons (HFC's) are also used, but they are greenhouse gases. Hydrocarbons, such as pentane isomers, have also been used, but these are flammable and have lower energy efficiency. Halogenated hydroolefinic compounds, such as HCFOs, are used as replacements for HFCs, since their chemical instability in the lower atmosphere provides for a low global warming potential and zero or near zero ozone depletion properties.

Formulations used to produce thermally insulating rigid polyurethane foam, particularly those used in the construction of panel assemblies, utilize catalysts to control the relative rates of water-polyisocyanate (gas-forming or blowing), the polyol-polyisocyanate (gelling) reaction to form polyurethane ("PUR"), and, in some cases, the isocyanate-isocyanate trimerization reaction to form polyisocyanurate ("PIR"). In the gelling reaction, the isocyanate reacts with polyols to form the polyurethane foam matrix. In the trimerization reaction, isocyanates react with one another to form macromolecules with isocyanurate structures (polyisocyanurates). In the blowing reaction, the isocyanate reacts with water in the formulation to form polyurea and carbon dioxide. While these reactions take place at different rates, it is necessary to properly balance them to produce high-quality foam. For example, if the blowing reaction occurs faster than the gelling reaction, the gas generated by the reaction may expand before the polyurethane matrix is strong enough to contain it and foam collapse can occur. In contrast, if the gelling reaction occurs faster than the blowing reaction, the foam cells will remain closed, causing the foam to shrink as it cools. Moreover, if the gelling reaction occurs while the reaction mixture is still flowing, cell stretching may occur, resulting in elongated cell structures. Foams with such elongated cell structures generally exhibit poorer physical properties, such as poorer compressive strength, poorer dimensional stability (more foam shrinkage), poorer thermal insulation properties, and poorer foam quality (due to surface voids and other defects).

As a result, to achieve the proper balance, formulations often utilize a combination of different catalysts. Amine catalysts, for example, are known to have a greater effect on the water-polyisocyanate blowing reaction, whereas organotin catalysts are known to have a greater effect on the polyol-polyisocyanate gelling reaction.

A drawback to at least some HCFOs as blowing agents in the production of satisfactory isocyanate-based foams is poor shelf-life. Blowing agents often are combined with polyols and other components, such as surfactant(s) and the catalyst(s), to form a so-called "B-side" pre-mix that may be stored for up to several months prior to being combined with an "A-side" isocyanate component to form the foam.

With certain HCFOs, however, if the B-side composition is aged prior to combining with the polyisocyanate, the foam can be of lower quality and may even collapse during the formation of foam. The poor foam structure is thought to be attributable to the reaction of certain catalysts, particularly amine catalysts, with these HCFOs which results in the partial decomposition of the blowing agent and, as a result, undesirable modification of silicone surfactants, resulting in poor foam structure and quality.

To combat this issue, certain amine catalysts have been identified that can exhibit substantially improved stability with HCFOs. These include morpholines and imidazoles. Such catalysts, however, are not without some drawbacks. In addition to being relatively costly, they tend to be weak catalysts, thereby necessitating their use in relatively high loadings, which both amplifies the cost impact and limits the ability of a foam formulator to optimize the foam flow profile and quality.

As a result, it would be desirable to provide HCFO-containing isocyanate-reactive compositions that are phase stable, that can produce foam-forming compositions that exhibit, for example, improve flow properties, all the while utilizing little, if any, of the foregoing weak and costly amine catalysts.

### SUMMARY

In certain respects, this disclosure is directed to isocyanate-reactive compositions. These compositions comprise: (a) an isocyanate-reactive compound, (b) a blowing agent composition comprising a hydrochlorofluoroolefin; and (c) a catalyst composition comprising a tertiary amine oxide.

The present specification is also directed to foam-forming compositions that include such isocyanate-reactive compositions, rigid polyurethane foams and PUR-PIR foams produced from such foam-forming compositions, methods for making such rigid foams, and composite articles comprising such rigid foams, and panel insulation that includes such rigid foams.

### DETAILED DESCRIPTION

Various implementations are described and illustrated in this specification to provide an overall understanding of the structure, function, properties, and use of the disclosed inventions. It is understood that the various implementations described and illustrated in this specification are non-limiting and non-exhaustive. Thus, the invention is not limited by the description of the various non-limiting and non-exhaustive implementations disclosed in this specification. The features and characteristics described in connection with various implementations may be combined with the features and characteristics of other implementations. Such modifications and variations are intended to be included within the scope of this specification. As such, the claims may be amended to recite any features or characteristics expressly or inherently described in, or otherwise expressly or inherently supported by, this specification. Further, Applicant(s) reserve the right to amend the claims to affirmatively disclaim features or characteristics that may be present in the prior art. Therefore, any such amendments comply with the requirements of 35 U.S.C. § 112 and 35 U.S.C. § 132(a). The various implementations disclosed and described in this specification can comprise, consist of, or consist essentially of the features and characteristics as variously described herein.

Any patent, publication, or other disclosure material identified herein is incorporated by reference into this specification in its entirety unless otherwise indicated, but only to the extent that the incorporated material does not conflict with existing definitions, statements, or other disclosure material expressly set forth in this specification. As such, and to the extent necessary, the express disclosure as set forth in this specification supersedes any conflicting material incorporated by reference herein. Any material, or portion thereof, that is said to be incorporated by reference into this specification, but which conflicts with existing definitions, statements, or other disclosure material set forth herein, is only incorporated to the extent that no conflict arises between that incorporated material and the existing disclosure material. Applicant(s) reserves the right to amend this specification to expressly recite any subject matter, or portion thereof, incorporated by reference herein.

In this specification, other than where otherwise indicated, all numerical parameters are to be understood as being prefaced and modified in all instances by the term "about", in which the numerical parameters possess the inherent variability characteristic of the underlying measurement techniques used to determine the numerical value of the parameter. At the very least, and not as an attempt to limit the application of the doctrine of equivalents to the scope of the claims, each numerical parameter described in the present description should at least be construed in light of the number of reported significant digits and by applying ordinary rounding techniques.

Also, any numerical range recited in this specification is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited in this specification is intended to include all lower numerical limitations subsumed therein and any minimum numerical limitation recited in this specification is intended to include all higher numerical limitations subsumed therein. Accordingly, Applicant(s) reserves the right to amend this specification, including the claims, to expressly recite any sub-range subsumed within the ranges expressly recited herein. All such ranges are intended to be inherently described in this specification such that amending to expressly recite any such sub-ranges would comply with the requirements of 35 U.S.C. § 112 and 35 U.S.C. § 132(a).

The grammatical articles "one", "a", "an", and "the", as used in this specification, are intended to include "at least one" or "one or more", unless otherwise indicated. Thus, the articles are used in this specification to refer to one or more than one (i.e., to "at least one") of the grammatical objects of the article. By way of example, "a component" means one or more components, and thus, possibly, more than one component is contemplated and may be employed or used in an implementation of the described implementations. Further, the use of a singular noun includes the plural, and the use of a plural noun includes the singular, unless the context of the usage requires otherwise.

As used herein, the term "functionality" refers to the average number of reactive hydroxyl groups, -OH, present per molecule of the -OH functional material that is being described. In the production of polyurethane foams, the hydroxyl groups react with isocyanate groups, -NCO, that are attached to the isocyanate compound. The term "hydroxyl number" refers to the number of reactive hydroxyl groups available for reaction, and is expressed as the number of milligrams of potassium hydroxide equivalent to the hydroxyl content of one gram of the polyol (ASTM D4274-16). The term "equivalent weight" refers to the weight of a compound divided by its valence. For a polyol, the equivalent weight is the weight of the polyol that will combine with an isocyanate group, and may be calculated by dividing the molecular weight of the polyol by its functionality. The equivalent weight of a polyol may also be calculated by dividing 56,100 by the hydroxyl number of the polyol - Equivalent Weight (g/eq) = (56.1 × 1000)/OH number.

Number average and weight average, Mn and Mw respectively, molecular weight value reported herein can be determined by gel-permeation chromatography (GPC) using a method based on DIN 55672-1 employing chloroform as the eluent with a mixed bed column (Agilent PL Gel; SDVB; 3 micron Pore dia: 1×Mixed-E + 5 micron Pore dia: 2xMixed-D), refractive index (RI) detection and calibrated with polyethylene glycol.

As indicated, certain implementations of this specification relate to isocyanate-reactive compositions useful in the production of, for example, rigid foams. A rigid foam is characterized as having a ratio of compressive strength to tensile strength of at least 0.5:1, elongation of less than 10%, as well as a low recovery rate from distortion and a low elastic limit, as described in in "Polyurethanes: Chemistry and Technology, Part II Technology," J. H. Saunders & K. C. Frisch, Interscience Publishers, 1964, page 239.

The foams, such as rigid foams, of this specification are the reaction product of a polyurethane-foam forming composition that includes: (a) a polyisocyanate; and (b) an isocyanate-reactive composition. As used herein, the term "polyisocyanate" encompasses diisocyanates and isocyanates having an isocyanate functionality of greater than 2.

Any of the known organic isocyanates, modified isocyanates or isocyanate-terminated prepolymers made from any of the known organic isocyanates may be used. Suitable organic isocyanates include aromatic, aliphatic, and cycloaliphatic polyisocyanates and combinations thereof. Useful isocyanates include: diisocyanates such as m-phenylene diisocyanate, p-phenylene diisocyanate, 2,4-toluene diisocyanate, 2,6-toluene diisocyanate, 1,6-hexamethylene diisocyanate, 1,4-hexamethylene diisocyanate, 1,3-cyclohexane diisocyanate, 1,4-cyclo-hexane diisocyanate, isomers of hexahydrotoluene diisocyanate, isophorone diisocyanate, dicyclo-hexylmethane diisocyanates, 1,5-naphthylene diisocyanate, 4,4'-diphenylmethane diisocyanate, 2,4'-diphenylmethane diisocyanate, 4,4'-biphenylene diisocyanate, 3,3'-dimethoxy-4,4'-biphenylene diisocyanate and 3,3'-dimethyl-diphenyl-propane-4,4'-diisocyanate; triisocyanates such as 2,4,6-toluene triisocyanate; and polyisocyanates such as 4,4'-dimethyl-diphenylmethane-2,2',5,5'-tetraisocyanate and the polymethylene polyphenyl-polyisocyanates.

Undistilled or crude polyisocyanates may also be used. The crude toluene diisocyanate obtained by phosgenating a mixture of toluene diamines and the crude diphenylmethane diisocyanate obtained by phosgenating crude diphenylmethanediamine (polymeric MDI) are examples of suitable crude polyisocyanates. Suitable undistilled or crude polyisocyanates are disclosed in U.S. Pat. No. 3,215,652.

Modified isocyanates are obtained by chemical reaction of polyisocyanates. Useful modified isocyanates include, but are not limited to, those containing ester groups, urea groups, biuret groups, allophanate groups, carbodiimide groups, isocyanurate groups, uretdione groups and/or urethane groups. Examples of modified isocyanates include prepolymers containing NCO groups and having an NCO content of from 25 to 35 weight percent, such as from 29 to 34 weight percent, such as those based on polyether polyols or polyester polyols and diphenylmethane diisocyanate.

In certain implementations, the polyisocyanate comprises a methylene-bridged polyphenyl polyisocyanate and/or a prepolymer of methylene-bridged polyphenyl polyisocyanates having an average functionality of from 1.8 to 3.5, such as from 2.0 to 3.1, isocyanate moieties per molecule and an NCO content of from 25 to 32 weight percent, due to their ability to cross-link the polyurethane.

The isocyanate-reactive compositions described in this specification comprise an isocyanate-reactive compound, often a blend of two or more isocyanate-reactive compounds.

Often, the isocyanate-reactive compound has at least two groups per molecule that are capable of reacting with an isocyanate group. In some implementations, the isocyanate-reactive compound(s) have an average of 1.8 to 8, such as or 2 to 6, such isocyanate-reactive groups, such as NH-, OH-, COOH or -SH-groups . Suitable such isocyanate-reactive compounds include, for example, polyols, polyamines, (poly)aminoalcohols and polythiols.

Polyamines suitable for use in the isocyanate-reactive compositions of this specification include, without limitation, ethylenediamine, 1,2- and 1,3-diaminopropane, 1,4-diaminobutane, 1,6-diaminohexane, isophoronediamine, isomer mixtures of 2,2,4- and 2,4,4-trimethylhexamethylenediamine, 2-methylpentamethylenediamine, diethylenetriamine, 1,3- and 1,4-xylylenediamine, α, α, α', α'-tetramethyl-1,3-und-1,4-xylylenediamine, 4,4-diaminodicyclohexylmethane, diethylmethylbenzenediamine (DETDA), 4,4'-diamino-3,3'-dichlorodiphenylmethane (MOCA), dimethylethylenediamine, 1,4-bis(aminomethyl)cyclohexane, 4,4'-diamino-3,3'-dimethyldicyclohexylmethane, 4,4'-diamino-3,5-diethyl-3',5'-diisopropyldicyclohexylmethane, as well as mixtures of any two or more of the foregoing. Also useful are polymeric polyamines such as polyoxyalkyleneamines.

Amino alcohols suitable for use in the isocyanate-reactive compositions of this specification include, without limitation, N-aminoethylethanolamine, ethanolamine, 3-aminopropanol, neopentanolamine, diethanolamine, and mixtures of any two or more thereof.

Polythiols suitable for use in the isocyanate-reactive compositions of this specifications include, without limitation, di(2-mercaptoethyl)ether, pentaaerythritoltetrakisthioglycolate, pentacrythritoltetrakis(3-mercaptopropionate), 1,2-bis((2-mercaptoethyl)thio)-3-mercaptopropane, as well as mixtures of any two or more thereof.

In some implementations, however, the isocyanate-reactive compound(s) present in the isocyanate-reactive compositions of this specification comprise a polyol. Suitable polyols include, for example, those having a number-average molecular weight (Mn) of 62 g/mol to 8000 g/mol, such as 90 g/mol to 5000 g/mol, or, in some cases, 92 g/mol to 1000 g/mol. In the case of a single added polyol the OH number of the isocyanate-reactive compound indicates the OH number of said polyol. In the case of mixtures, the average OH number is indicated. In some implementations, the average OH functionality of the cited polyols is, for example, at least 2, such as 2 to 6, 2.1 to 4, or 2.2 to 3.

Suitable polyols for use in the isocyanate-reactive compositions of this specification include polyether polyols including, for example, polytetramethylene glycol polyethers as are obtainable by polymerization of tetrahydrofuran by cationic ring opening.

Also suitable are polyether polyols that are addition products of styrene oxide, ethylene oxide, propylene oxide, butylene oxides and/or epichlorohydrin onto di- or polyfunctional starter molecules. Examples of useful starter molecules include water, ethylene glycol, diethylene glycol, butyl diglycol, glycerol, diethylene glycol, trimethylolpropane, propylene glycol, pentaerythritol, sorbitol, sucrose, ethylenediamine, toluenediamine, triethanolamine, 1,4-butanediol, 1,6-hexanediol and low molecular weight hydroxyl-containing esters of such polyols with dicarboxylic acids.

Suitable polyols for use in the isocyanate-reactive compositions of this specification include polyester polyols, such as polycondensates of di- and also tri- and tetraols and di- and also tri- and tetracarboxylic acids or hydroxycarhoxylic acids or lactones. Rather than employing the free polycarboxylic acids, it is also possible to use the corresponding polycarboxylic anhydrides or corresponding polycarboxylic esters of lower alcohols for preparing the polyesters. Examples of useful diols include ethylene glycol, butylene glycol, diethylene glycol, triethylene glycol, polyalkylene glycols, such as polyethylene glycol, 1,2-propandiol, 1,3-propanediol, 1,3-butanediol, 1,4-butanediol, 1,6-hexanediol and isomers, neopentyl glycol or neopentyl glycol hydroxypivalate. It is also possible to use higher-functionality polyols, such as trimethylolpropane, glycerol, erythritol, pentaerythritol, trimethylolbenzene or trishydroxyethyl isocyanurate. Examples of polycarboxylic acids that may be used include phthalic acid, isophthalic acid, terephthalic acid, tetrahydrophthalic acid, hexahydrophthalic acid, cyclohexanedicarboxylic acid, adipic acid, azelaic acid, sebacic acid, glutaric acid, tetrachlorophthalic acid, maleic acid, fumaric acid, itaconic acid, trialonic acid, suberic acid, succinic acid, 2-methylsuccinic acid, 3,3-diethylglutaric acid, 2,2-dimethylsuccinic acid, dodecanedioic acid, endomethylenetetrahydrophthalic acid, dimer fatty acid, trimer fatty acid, citric acid, or trimellitic acid. It is also possible to use the corresponding anhydrides as an acid source. Moreover, provided that the average functionality of the polyol to be esterified is at least 2, it is also possible to use monocarboxylic acids such as benzoic acid and hexanecarboxylic acid. Examples of hydroxycarboxylic acids that may be used as coreactants in the production of a polyester polyol having terminal hydroxyl groups include hydroxycaproic acid, hydroxybutyric acid, hydroxydecanoic acid, hydroxystearic acid and the like. Suitable lactones include, for example, caprolactone, butyrolactone and homologs.

Suitable polyols for use in the isocyanate-reactive compositions of this specification also include polycarbonate polyols, such as polycarbonate diols. These are obtainable by reaction of carbonic acid derivatives, such as diphenyl carbonate, dimethyl carbonate or phosgene, with polyols, such as diols, or by copolymerization of alkylene oxides, such as propylene oxide, with carbon dioxide. Examples of such diols include ethylene glycol, 1,2- and 1,3-propanediol, 1,3- and 1,4-butanediol, 1,6-hexanediol, 1,8-octanediol, neopentyl glycol, 1,4-bishydroxymethylcyclohexane, 2-methyl-1,3-propanediol, 2,2,4-trimethylpentane-1,3-diol, dipropylene glycol, polypropylene glycols, dibutylene glycol, polybutylene glycols, bisphenol A, and lactone-modified diols of the aforementioned. It is also possible to use polyetherpolycarbonate diols in place of or in addition to pure polycarbonate diols.

Polyetherester polyols are also suitable for use in the isocyanate-reactive compositions of this specification. These contain ether groups, ester groups and OH groups. Organic dicarboxylic acids having up to 12 carbon atoms are useful for producing the polyetherester polyols, such as aliphatic dicarboxylic acids having 4 to 6 carbon atoms, or aromatic dicarboxylic acids, both of which can be used singly or in admixture. Examples of suitable dicarboxylic acids include suberic acid, azelaic acid, decanedicarboxylic acid, maleic acid, malonic acid, phthalic acid, pimelic acid and sebacic acid, glutaric acid, fumaric acid, succinic acid, adipic acid, phthalic acid, terephthalic acid and isoterephthalic acid. Derivatives of these acids that may be used include, for example, their anhydrides and also their diesters and monoesters with low molecular weight monofunctional alcohols having 1 to 4 carbon atoms. Polyether polyols obtained by alkoxylation of starter molecules such as those mentioned earlier, are a further component used for producing polyetherester polyols. The starter molecules are at least difunctional, but may optionally also contain proportions of higher-functional, in particular trifunctional, starter molecules. Specific examples of suitable starter molecules include, for example, diols having a number-average molecular weight of 18 g/mol to 400 g/mol or of 62 g/mol to 200 g/mol, such as 1,2-ethanediol, 1,3-propanediol, 1,2-propanediol, 1,4-butanediol, 1,5-pentenediol, 1,5-pentanediol, neopentylglycol, 1,6-hexanediol, 1,7-heptanediol, 1,8-octanediol, 1,10-decanediol, 2-methyl-1,3-propanediol, 2,2-ditriethyl-1,3-propanediol, 3-methyl-1,5-pentanediol, 2-butyl-2-ethyl-1,3 -propanediol, 2-butene-1,4-diol and 2-butyne-1,4-diol, ether dials such as diethylene glycol, triethylene glycol, tetraethylene glycol, dibutylene glycol, tributylene glycol, tetrabutylen glycol, dihexylene trihexylene glycol, tetrahexylene glycol and oligomeric mixtures of alkylene glycols, such as diethylene glycol. In addition, polyols having number-average functionalities of 2 to 8 or of 3 to 4 may also be employed, examples being 1,1,1-trimethylolpropane, triethanolamine, glycerol, sorbitan and pentaerythritol and also triol- or tetraol-started polyethylene oxide polyols having average molecular weights of, for example, 62 g/mol to 400 g/mol or of 92 g/mol to 200 g/mol.

Polyetherester polyols may also be produced by alkoxylation of reaction products obtained by reaction of organic dicarboxylic acids and diols. Derivatives of these acids that may be used include, for example, their anhydrides, for example phthalic anhydride.

Also suitable for use in the isocyanate-reactive compositions of this specification are polyacrylate polyols, such as are obtainable by free-radical polymerization of hydroxyl-containing, olefinically unsaturated monomers or by free-radical copolymerization of hydroxyl-containing, olefinically unsaturated monomers with optionally other olefinically unsaturated monomers. Examples include ethyl acrylate, butyl acrylate, 2-ethylhexyl acrylate, isobornyl acrylate, methyl methacrylate, ethyl methacrylate, butyl methacrylate, cyclohexyl methacrylate, isobornyl methacrylate, styrene, acrylic acid, acrylonitrile and/or methacrylonitrile. Useful hydroxyl-containing, olefinically unsaturated monomers include, without limitation, 2-hydroxyethyl acrylate, 2-hydroxyethyl methacrylate, the hydroxypropyl acrylate isomer mixture obtainable by addition of propylene oxide onto acrylic acid, and the hydroxypropyl methacrylate isomer mixture obtainable by addition of propylene oxide onto methacrylic acid. Terminal hydroxyl groups may also be in protected form. Useful free-radical initiators include azo compounds, such as azoisobutyronitrile (AIBN), and peroxides, such as di-tert-butyl peroxide.

In some implementations, the isocyanate-reactive composition comprises a blend of aromatic polyester polyol and polyester or polyether polyols that contain renewable content derived from incorporation of regenerable materials such as fatty acid triglycerides, sugars, or natural glycerin.

For example, in some implementations, the isocyanate-reactive compound comprises a saccharide-initiated polyether polyol. As used herein, "saccharide-initiated polyether polyol" refers to a polyether polyol prepared by reacting at least one alkylene oxide with one or more suitable starter compounds in the presence of a suitable catalyst, in which the starter compounds comprise one or more initiators based on non-reducible carbohydrates or sugar alcohols. Examples of suitable alkylene oxides include ethylene oxide, propylene oxide, butylene oxide, styrene oxide, epichlorohydrin, or a mixture of any two or more thereof. Some examples of suitable saccharide initiators are sucrose, sorbitol, xylitol and maltitol, as well as other mono-saccharides, di-saccharides, tri-saccharides and polysaccharides. Other initiator compounds are often used in combination with the saccharide initiator to prepare the saccharide initiated polyether polyol. Saccharides can be co-initiated with for example, compounds such as water, propylene glycol, glycerin, ethylene glycol, ethanol amines, diethylene glycol, or a mixture of any two or more thereof. As will be appreciated, it is possible to use a wide variety of individual initiator compounds in combination with one another in which the functionality of the individual initiator compounds does not fall within the functionalities set forth herein, provided that the average functionality of the mixture of initiator compounds satisfies the overall functionality range disclosed herein.

Some examples of suitable catalysts which can be used include basic catalysts (such as sodium or potassium hydroxide or tertiary amines such as methyl imidazole) and double metal cyanide (DMC) catalysts.

In some implementations, the saccharide, such as sucrose, is first reacted with ethylene oxide and then propylene oxide. In some cases, the ethylene oxide is used in an amount of 10 to 50%, such as from 20 to 40%, by weight of the total alkylene oxide used and the propylene oxide is used in an amount of from 50 to 90%, such as 60 to 80%, by weight of the total alkylene oxide used. In some implementations, the total amount of alkylene oxide used is selected so that the product has an average molecular weight of 300 to 1600 Da, such as 440 to 1000 Da.

In some implementations, the saccharide initiated polyether polyol has an OH number of from 200 to 600 mg KOH/g, such as 300 to 550 mg KOH/g, such as 350 to 450 mg KOH/g, or, in some cases, 450 to 500 mg KOH/g, and a functionality of 4 to 6, such as 5 to 6, 5.5 to 6.0, or 5.6 to 5.9.

In some implementations, the saccharide-initiated polyether polyol is utilized in an amount of 10 to 90% by weight, such as 10 to 50% by weight, or, in some cases, 10 to 30% by weight or 20 to 30% by weight, based on the total weight of polyols in the isocyanate-reactive composition.

In some implementations, the isocyanate-reactive compound comprises an aromatic polyester polyol. Suitable aromatic polyester polyols include, for example, the reaction product of an aromatic diacid or anhydride with a suitable glycol or triol. For example, polyester polyols can be the reaction product of a glycol and/or triol, such as ethylene glycol, propylene glycol, butylene glycol, 1,3- butanediol, neopentyl glycol, diethylene glycol, dipropylene glycol, triethylene glycol, tripropylene glycol, glycerol, trimethylolethane, trimethyolpropane, pentanediol, hexanediol, heptanediol, 1,3- and 1,4-dimethylol cyclohexane, or a mixture of any two or more thereof with an aromatic diacid or aromatic anhydride, such as, for example, phthalic acid, isophthalic acid, terephthalic acid, phthalic anhydride, or a mixture of any two or more thereof. Some of examples of the suitable aromatic polyester polyols include those compounds which are available from Stepan Chemical under the Stepanpol trade name such as, for example, Stepanpol^{®} PS 3024 and Stepanpol PS 2502A or from Invista under the Terate trade name, such as Terate^{®} HT-5100 and HT-5500, or from Coim under the Isoexter trade name such as Isoexter^{®} TB-265.

In certain implementations, the aromatic polyester polyol has an OH number of 150 to 410 mg KOH/g, such as 150 to 360 mg KOH/g, such as 200 to 335 mg KOH/g, or, in some cases, 200 to 250 mg KOH/g, and a functionality of 1.5 to 3, such as 1.9 to 2.5.

In some implementations, the aromatic polyester polyol is utilized in an amount of 30 to 80%, such as 30 to 60% by weight, 30 to 50% by weight or 40 to 50% by weight, based on the total weight of polyols in the isocyanate-reactive composition.

In certain implementations, the aromatic polyester polyol and the saccharide-initiated polyether polyol are present in isocyanate-reactive composition in a weight ratio of at least 1:1, such as 1:1 to 8:1, or, in some cases 1:1 to 6:1 or 1:1 to 4:1 or 1:1 to 2:1.

In some implementations, the isocyanate-reactive compound comprises an amine-initiated, such as an aromatic amine-initiated or alkanolamine-initiated, polyether polyol. As used herein, "alkanolamine-initiated polyether polyol" refers to a polyether polyol prepared by reacting at least one alkylene oxide with one or more suitable starter compounds in the presence of a suitable catalyst, in which the starter compounds comprise one or more alkanolamines. Suitable catalysts including basic catalysts (such as sodium or potassium hydroxide or tertiary amines such as methyl imidazole) and DMC catalysts.

As used herein, the term "alkanolamine" refers to compounds represented by the formula:

NH₂-Z-OH

in which Z represents a divalent radical which is a straight chain or branched chain alkylene radical having 2 to 6 carbon atoms, a cycloalkylene radical having 4 to 6 carbon atoms or a dialkylene ether radical having 4 to 6 carbon atoms. The dialkylene ether radical may be represented by the formula:

-R-O-R-

where each R represents a hydrocarbon radical having 2 to 3 carbon atoms.

Specific examples of suitable alkanolamines that may be used in the preparation of the alkanolamine-initiated polyether polyol include monoethanolamine, 1-amino-2-propanol, 2-amino-1-propanol, 3-amino-1-propanol, 1-(2-aminoethoxy) ethanol, 1-amino-2-butanol, 2-amino-3-butanol, 2-amino-2-methylpropanol, 5-amino pentanol, 3-amino-2, 2-dimethyl propanol, 4-aminocyclohexanol, as well as mixtures of any two or more thereof.

To prepare the alkanolamine-initiated polyether polyol, the alkanolamine is reacted with an alkylene oxide. Suitable alkylene oxides include ethylene oxide, propylene oxide, butylene oxide, styrene oxide, and epichlorohydrin, as well as mixtures of any two or more thereof.

In some implementations, the amine-initiated polyether polyol has an OH number of at least 300 mg KOH/g, such as 300 to 900 mg KOH/g, 350 to 800 mg KOH/g, or, in some cases, 680 to 720 mg KOH/g, and a functionality of 2.5 to 4, such as 2.5 to 3.5.

In some implementations, the amine-initiated polyether polyol is utilized in an amount of 20 to 80%, such as 20 to 60% by weight, 30 to 50% by weight or 30 to 40% by weight, based on the total weight of isocyanate-reactive compounds present in the isocyanate-reactive composition.

In certain implementations, the amine-initiated polyether polyol and the aromatic polyester polyol are present in the isocyanate-reactive composition in a weight ratio of at least 1:1, such as 1:1 to 8:1, or, in some cases 1:1 to 6:1 or 1.5: to 2.5:1. In certain implementations, the amine-initiated polyether polyol and the saccharide-initiated polyether polyol are present in the isocyanate-reactive composition in a weight ratio of at least 0.5:1, such as 0.5:1 to 4:1, or, in some cases 1:1 to 2:1 or 1:1 to 1.5:1.

If desired, the isocyanate-reactive compound blend may include additional compounds that contain isocyanate-reactive groups, such as chain extenders and/or crosslinking agents, and higher molecular weight polyether polyols and polyester polyols not described above. Chain extenders and/or crosslinking agents include, for example, ethylene glycol, propylene glycol, butylene glycol, glycerol, diethylene glycol, dipropylene glycol, dibutylene glycol, trimethylolpropane, pentaerythritol, ethylene diamine, and diethyltoluenediamine, among others. In certain implementations, the isocyanate-reactive composition has a weighted average functionality of from 2 to 4, such as 2 to 3 or 2.5 to 3.0, and/or a weighted average hydroxyl number of from 300 to 500 mg KOH/g, such as 300 to 400 mg KOH/g.

In certain implementations, the isocyanate-reactive compound comprises less than 20% by weight, less than 10% by weight, less than 5% by weight, or, in some cases, less than 1% by weight, of ethylene oxide, based on the total weight of the saccharide initiated polyether polyol and the alkanolamine-initiated polyether polyol.

As indicated, the isocyanate-reactive composition of this specification further comprises a blowing agent composition. The blowing agent composition comprises: (1) a physical blowing agent comprising an HCFO.

Suitable HCFOs include 1-chloro-3,3,3-trifluoropropene (HCFO-1233zd, E and/or Z isomers), 2-chloro-3,3,3-trifluoropropene (HCFO-1233xf), HCFO1223, 1,2-dichloro-1,2-difluoroethene (E and/or Z isomers), 3,3-dichloro-3-fluoropropene, 2-chloro-1,1,1,4,4,4-hexafluorobutene-2 (E and/or Z isomers), 2-chloro-1,1,1,3,4,4,4-heptafluorobutene-2 (E and/or Z isomers). In some implementations, the boiling point, at atmospheric pressure, of the HCFO is at least -25°C, at least -20°C, or, in some cases, at least -19°C, and 40°C or less, such as 35°C or less, or, in some cases 33°C or less. The HCFO may have a boiling point, at atmospheric pressure, of, for example, -25°C to 40°C, or -20°C to 35°C, or -19°C to 33°C.

In some implementations, the HCFO is utilized in an amount of at least 5% by weight, such as 5 to 30% by weight, 10 to 30% by weight, 15 to 25% by weight, or 18 to 22% by weight, based on the total weight of the isocyanate-reactive composition.

In certain implementations, the isocyanate-reactive composition comprises one or more other physical blowing agents, such as other halogenated blowing agents, such as CFCs, HCFCs, and/or HFCs and/or hydrocarbon blowing agents, such as butane, n-pentane, cyclopentane, hexane, and/or isopentane (i.e. 2-methylbutane). In other embodiments, the isocyanate-reactive composition is substantially or, in some cases, completely free, of other physical blowing agents, such as other halogenated blowing agents, such as CFCs, HCFCs, and/or HFCs and/or hydrocarbon blowing agents, such as butane, n-pentane, cyclopentane, hexane, and/or isopentane (i.e. 2-methylbutane). As used herein, the term "substantially free" when used with reference to these blowing agents, means that the blowing agent is present, if at all, in an amount of less than 10% by weight, such as less than 1% by weight, based on the total weight of the blowing agent composition.

In some implementations, the isocyanate-reactive composition comprises a carbon dioxide generating chemical blowing agent, such as water and/or formate-blocked amines. In some of these implementations, the carbon dioxide generating chemical blowing agent, such as water, is utilized in an amount of from 0.5 to 5.0% by weight, such as 1 to 4% by weight, or 2.0 to 4.0% by weight, or 3.0 to 4.0% by weight, based on the total weight of the isocyanate-reactive composition.

In certain implementations, the blowing agent composition comprises HCFO and a carbon dioxide generating chemical blowing agent, such as water, wherein the combined amount of HCFO and carbon dioxide generating chemical blowing agent is at least 90% by weight, such as at least 95% by weight, or, in some cases, at least 99% by weight, based on the total weight of the blowing agent composition. In certain implementations, the HCFO and a carbon dioxide generating chemical blowing agent are present in the blowing agent composition at a weight ratio of at least 1:1, such as at least 2:1, such as 2:1 to 10:1, 2:1 to 6:1, or 2:1 to 4:1.

If desired, the blowing agent composition may include other physical blowing agents, such as (a) other hydrofluoroolefins (HFOs), such as pentafluoropropane, tetrafluoropropene, 2,3,3,3-tetrafluoropropene, 1,2,3,3-tetrafluoropropene, trifluoropropene, tetrafluorobutene, pentafluorobutene, hexafluorobutene, heptafluorobutene, heptafluoropentene, octafluoropentene, and nonafluoropentene; (b) hydrofluorocarbons (c) hydrocarbons, such as any of the pentane isomers and butane isomers; (d) hydrofluoroethers (HFEs); (e) C₁ to C₅ alcohols and their esters with formic acid, C₁ to C₄ aldehydes, C₁ to C₄ ketones, C₁ to C₄ ethers, C₃ to C₇ acetals and diethers and carbon dioxide. Specific examples of such blowing agents are described in United States Patent Application Publication No. US 2014/0371338 A1 at [0051] and [0053], the cited portion of which being incorporated herein by reference.

In some implementations, the isocyanate-reactive composition also comprises a surfactant. Any suitable surfactant can be used, including organosilicon compounds, such as polysiloxane-polyalkyene-block copolymers, such as a polyether-modified polysiloxane. Other useful surfactants include polyethylene glycol ethers of long chain alcohols, tertiary amine or alkanolamine salts of long chain alkyl acid sulfate esters, alkylsulfonic esters, or alkylarylsulfonic acids. Such surfactants are employed in amounts sufficient to stabilize the foaming reaction mixture against collapse and the formation of large and uneven cells. In some implementations, surfactant is utilized in an amount of 0.2 to 5.0% by weight, such as 1 to 3% by weight, based on the total weight of the isocyanate-reactive composition.

As indicated earlier, the isocyanate-reactive composition further comprises a tertiary amine oxide, also termed tertiary amine oxide catalyst. As will be appreciated, tertiary amine catalysts are known as "blow catalysts" since they have a greater effect on the water-polyisocyanate blowing reaction.

Tertiary amine oxide catalysts suitable for use in the inventions of this specification include those having the structure (I): 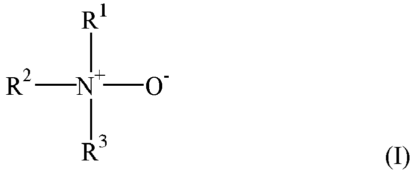 in which R¹, R² and R³ each independently represent a monovalent alkyl, cycloalkyl, aralkyl or heterocyclic radical, or wherein at least two of R¹, R² and R³ and the N-atom of the formula form a heterocyclic ring with or without other hetero atoms, such as oxygen, in the ring, and having up to 20 carbon atoms.

Examples of suitable alkyl radicals include those having 1 to 22, such as 2 to 8 or 2 to 4, carbon atoms, such as ethyl, octyl, and octadecyl. Cyclopentyl, cyclohexyl, cyclooctyl, and cyclododecyl are exemplary cycloalkyl radicals. Benzyl is a suitable aralkyl radical. The heterocyclic radical have 5 or 6 atoms in the ring, one of which is nitrogen and the others being carbon, optionally substituted with one other atom, examples of which are morpholinyl, piperidinyl, azacyclohexanyl, and pyrrolidinyl radicals. A specific example of a suitable tertiary amine oxide of the above formula is triethyl amine-N-oxide.

In some implementations, however, the tertiary amine oxide is a heterocylic tertiary amine oxide, such as an N-alkyl piperidine, an N-alkyl morpholine, an N-alkyl pyrrolidine, and/or an N,N'-dioxide of a N,N'-dialkylpiperazine.

Some specific examples of suitable tertiary amine oxide catalysts for use in the inventions of this specification are: dimethyldodecylamine N-oxide, benzyldimethylamine N-oxide, dimethyltetradecylamine N-oxide, diethylhexadecylamine N-oxide, methylethyloctadecylamine N-oxide, trimethylamine N-oxide, triethylamine N-oxide, diethylmethylamine N-oxide, dimethylethylamine N- oxide, tri-n-propylamine N-oxide, tri-n-butylamine N-oxide, tri-n-amylamine N-oxide, diisopropylethylamine N-oxide, diethylisopropylamine N-oxide, dimethyl-n-butylamine N-oxide, dimethylcyclohexylamine N-oxide, N-methylpiperidine N-oxide, N-ethylpiperidine N-oxide, N-propylpiperidine N-oxide, N-isopropylpiperidine N-oxide, N-n-butylpiperidine N-oxide, N-isobutylpiperidine N-oxide, N-isoamylpiperidine N-oxide, N-methyl-3-isopropylpiperidine N-oxide, 2-methyl-N,3-diethylpiperidine N-oxide, N-methylmorpholine N-oxide, N-hydroxyethylmorpholine, N,N-dimethylethanolamin N-oxide, N,N-dimethylpropanolamin N-oxide, N,N-dimethylhexanolamin N-oxide, N-oxide, diisopropylethylamine N-oxide, N-ethylmorpholine N-oxide, N-methylpyrrolidine N-oxide, N,N,N',N',N",N"-pentamethyldipropylenetriamine N-oxide, N,N'-dimethylpiperazine N,N' -dioxide, N,N'-diethylpiperazine N,N'-dioxide, N,N'-dipropylpiperazine N,N'-dioxide, N,N'-diisoamylpiperazine N,N'-dioxide, triethylenediamine N,N'-dioxide, N,N,N',N'-tetramethyltrimethylenediamine N,N'-dioxide, N,N,N',N'-tetraethyltrimethylenediamine N,N'-dioxide, N,N,N',N'-tetramethyltetramethylenediamme N,N'-di-oxide, N,N,N',N'-tetramethylhexamethylenediamine N,N'-di-oxide, the N-oxides of N,N-dimethylaminopropylurea, N,N,N',N'-tetramethyl-bis-aminopropylurea, bisdimethylaminoethylether, pentamethylethylenediamine, 2-[[2-[2-(dimethylamino)ethoxy]ethyl]methylamino]-ethanol, *N*¹-[2-[[2-(dimethylamino)ethyl]methylamino]ethyl]-*N*¹-methyl-1,3-propanediamine, and mixtures of any two or more thereof including the respective hydrates.

In some implementations, the tertiary amine oxide may comprise an aromatic tertiary amine oxide, such as pyridine N-oxides, quinoline N-oxides, and isoquinoline N-oxides, such as those aromatic tertiary amine oxides having 5 to 18 carbon atoms. Specific examples of suitable aromatic tertiary amine oxides are pyridine N-oxide, 3-chloropyridine N-oxide, 3.5-dibromopyridine N-oxide, 4-methylpyridine N-oxide, 3-ethylpyridine N-oxide, 2-methylpyridine N-oxide, 4-tert-butylpyridine N-oxide, 3-phenylpyridine N-oxide, 3-(p-isopropyl) benzylpyridine N-oxide, 4-p-isopropylphenethylpyridine N-oxide, 4-p-methoxyphenethylpyridine N-oxide, 3-benzhydrylpyridine N-oxide, quinoline N-oxide, 8-chloroquînoline N-oxide, 4-bromoquinoline N-oxide, 3-methylquinoline N-oxide, 4-ethylquinoline N-oxide, 7-isopropyiquinoline N-oxide, 5.6-henzoquinoline N-oxide, 6-chloro-4-methylquinoline N-oxide, isoquinoline N-oxide, 8-chloroisoquinoline N-oxide, 4-bromoisoquinoline N-oxide, 6-methylisoquinoline N-oxide, and mixtures of any two or more thereof.

Of course, in some implementations, a blend of aromatic tertiary amine oxides and (cyclo)aliphatic tertiary amine oxides may be used.

In some implementations, the tertiary amine oxide may include more than one functional group, such as two or more amine oxide groups or one or more amine oxide groups in combination with one or more other functional groups, such as amine and/or hydroxyl groups, and, as a result, may itself act as a chain extender (2 functional groups) or as a cross-linking agent (at least 3 functional groups).

In certain implementations, the tertiary amine oxide is present in an amount of 0.01 to 5% by weight, such as 1 to 4% by weight or 2 to 4% by weight, based on the total weight of the isocyanate-reactive composition.

In some implementations, the isocyanate-reactive compositions of this specification may include other catalysts, such as other tertiary amine catalysts, in addition to the afore-described tertiary amine oxides. Suitable such tertiary amine catalysts include, for example, triethylenediamine (TEDA), dimethylcyclohexylamine (DMCHA), and dimethylethanolamine (DMEA), tetramethylbutanediamine (TMBDA) and N-(3-dimethylaminopropyl)-N,N-diisopropanolamine, bis-(2-dimethylaminoethyl)ether, N-ethylmorpholine, triethylamine (TEA) and benzyldimethylamine (BDMA), among others.

In some implementations, the isocyanate-reactive composition may include a tertiary amine catalyst that contains oxygen, but is not a tertiary amine oxide as described above. Such oxygen-containing tertiary amine catalysts include those amines containing ether and/or a hydroxyl group, such as an alkanolamine, an ether amine or a morpholine group-containing catalyst, such as an N-alkyl substituted morpholine. Suitable such oxygen-containing amine catalysts include those of the structure compounds corresponding to the following chemical structure (II):

R¹R²N(CH₂)₂X(CH₂)₂Y (II)

in which R¹ and R², which may be the same or different, are each a C₁-C₆ alkyl group, such as methyl, and/or an alkanol group, such as -CH₂CH₂OH or CH₂CH(CH₃)OH; X is O or NR³ and/or OH, where R³ is a C₁-C₆ alkyl group, such as methyl, or an alkanol group, such as -CH₂CH₂OH or CH₂-CH(CH₃)OH; and Y is OH or NR⁴R⁵, where R⁴ and R⁵, which may be the same or different, are each a C₁-C₆ alkyl group, such as methyl, and/or an alkanol group such as -CH₂CH₂OH or -CH₂CH(CH₃)OH; subject to the proviso that the compound contains at least one ether and/or hydroxyl group.

Specific examples of such oxygen-containing amine catalysts are, without limitation, bis-(2-dimethylaminoethyl)ether; N,N-dimethylethanolamine; N-ethylmorpholine; N-methylmorpholine; N,N,N'-trimethyl-N'-hydroxyethyl-bisaminoethylether; N-(3-dimethylaminopropyl)-N,N-diisopropanolamine; N,N-bis(3-dimethylaminopropyl)-N-isopropanolamine; 2-(2-dimethylaminoethoxy)ethanol; N,N,N'-trimethylaminoethyl-ethanolamine; and 2,2'-dimorpholinodiethylether, as well as mixtures of any two or more thereof.

Suitable amine catalysts for use in the isocyanate-reactive compositions of this specification include N-(3-dimethylaminopropyl)-N,N-diisopropanolamine, N,N-bis(3-dimethylaminopropyl)-N-isopropanolamine, 1,3-propanediamine, N'-(3-dimethylamino)propyl-N,N-dimethyl-, triethylenediamine, 1,2-dimethylimidazole, 1,3-propanediamine, N'-(3-(dimethylamino)propyl)-N,N-dimethyl-, N,N,N'N'-tetramethylhexanediamine, N,N",N"-trimethylaminoethylpiperazine, 1-methyl-4-(2-dimethylaminoethyl)piperazine, N,N,N',N'tetramethylethylenediamine, N,N-dimethylcyclohexylamine (DMCHA), Bis(N,N-dimethylaminoethyl)ether (BDMAFE), 1,4-diazabicyclo[2,2,2]octane (DABCO), 2-((2-dimethylaminoethoxy)-ethyl methyl-amino)ethanol, 1-(bis(3-dimethylamino)-propyl)amino-2-propanol, N,N',N"-tris(3-dimethylamino-propyl)hexahydrotriazine, 1,3,5-tris(3-(dimethylamino)propyl-hexahydro-s-triazine, dimorpholinodiethylether (DMDEE), N,N-dimethylbenzylamine, N,N,N',N",N"-pentaamethyldipropylenetriamine, N,N'-diethylpiperazine, dicyclohexylmethylamine, ethyldiisopropylamine, dimethylcyclohexylamine, dimethylisopropylamine, methylisopropylbenzylamine, methylcyclopentylbenzylamine, isopropyl-sec-butyl-trifluoroethylamine, diethyl-(α-phenyethyl)amine, tri-n-propylamine, dicyclohexylamine, t-butylisopropylamine, di-t-butylamine, cyclohexyl-t-butylamine, de-sec-butylamine, dicyclopentylamine, di-(α-trifluoromethylethyl)amine, di-(α-phenylethyl)amine, triphenylmethylamine, and 1,1-diethyl-n-propylamine.

In some implementations, the non-amine oxide amine catalyst used in certain isocyanate-reactive compositions of this specification comprise a morpholine, an imidazole, or an ether containing compounds, such as dimorpholinodiethylether, N-ethylmorpholine, N-methylmorpholine, bis(dimethylaminoethyl)ether, imidizole, n-methylimidazole, 1,2-dimethylimidazole, dimorpholinodimethylether, N,N,N',N',N",N"-pentamethyldipropylenetriamine, and bis(diethylaminoethyl)ether, bis(dimethylaminopropyl)ether, dimethylpiperazine, diethylaminopropylamine, ethylaminoethanol, diethylaminoethanol, isopropylaminoethanol, butylaminoethanol, dibutylaminoethanol, butyldiethanolamine, tert-butylaminoethanol, diethylhydroxylamine, and combinations thereof.

In some implementations of the isocyanate-reactive compositions of this specification, however, the tertiary amine oxide catalyst may be the only amine catalyst present in the isocyanate-reactive composition. In other cases, any non-amine oxide amine catalyst is used in a relatively low amount while still achieve the desired level of reactivity of the water-polyisocyanate blowing reaction. For example, in some implementations, the non-amine oxide amine catalyst, such as the morpholine and/or imidazole, is present in an amount of less than 2% by weight, such as 0.01 to 1.9% by weight, 0.01 to 1.0% by weight or even 0.01 to 0.5% by weight, based on the total weight of the isocyanate-reactive composition.

Moreover, in some implementations, the isocyanate-reactive composition can be substantially or, in some cases, completely free of gel catalyst, such as organometallic catalysts (for example dibutyltin dilaurate, dibutyltin diacetate, stannous octoate, potassium octoate, potassium acetate, and potassium lactate) that catalyze the reaction between a polyol and a polyisocyanate. As used herein, the term "substantially free", when used with reference to the absence of a catalyst, means that the catalyst is present in an amount of no more than 0.1% by weight, based on the total weight of the isocyanate-reactive composition.

In certain implementations, the isocyanate-reactive composition further comprises a trimerization catalyst, which may or may not itself be an amine catalyst. As will be appreciated, a trimerization catalyst is a material that catalyzes the formation of isocyanurate groups from polyisocyanates. This means that isocyanates can react with one another to form macromolecules with isocyanurate structures (polyisocyanurates). The reactions between isocyanates and polyols to form urethanes and isocyanates and isocyanates (homopolymerization) to form isocyanurates can occur at the same time or one after the other to form macromolecules with urethanes and isocyanurates.

Various trimerization catalysts may be suitable. In some implementations, however, the trimerization catalyst comprises a quaternary ammonium salt, such as a quaternary ammonium carboxylate. Useful quaternary ammonium carboxylates include, for example, (2-hydroxypropyl)trimethylammonium 2-ethylhexanoate (Dabco^{®} TMR from Evonik Industries) and (2-hydroxypropyl)trimethylammonium formate (Dabco^{®} TMR-2 from Evonik Industries). In some implementations, the trimerization catalyst is present in the isocyanate-reactive composition in an amount of from 0.25 to 3.0 % by weight, such as 0.25 to 1 % by weight, based on the total weight of the isocyanate-reactive composition.

Additional materials which may be included in the compositions of this specification include: pigments, colorants, fillers, antioxidants, flame retardants, and stabilizers. Exemplary flame retardants include, but are not limited to, reactive bromine based compounds and chlorinated phosphate esters, including but not limited to, tri(2-chloroethyl)phosphate (TECP), tri(1,3-dichloro-2-propyl)phosphate, tri(1-chloro-2-propyl)phosphate (TCPP) and dimethyl propyl phosphate (DMPP).

This specification is also directed to processes for producing rigid foams, such as polyurethane and polyurethane-polyisocyanurate ("PUR-PIR") foams. In such processes, a polyisocyanate is reacted with an isocyanate-reactive composition of the type described above. In some implementations, the isocyanate functional component and the isocyanate-reactive composition are mixed at an isocyanate index of from 90 to 150, such as 120 to 150.

In certain implementations, the polyol of the isocyanate-reactive composition is reacted with an polyisocyanate in the presence of the blowing agent composition, the catalyst composition, a surfactant and any other optional ingredients. The rigid foams may be prepared by blending all of the components of the isocyanate reactive composition together in a phase stable mixture, and then mixing this in the proper ratio with the polyisocyanate. Alternatively, one or more of the components, such as the surfactant, may be combined with the polyisocyanate prior to mixing it with the isocyanate reactive component. Other possible implementations would include adding one or more of the components as a separate stream, together with the isocyanate reactive component and polyisocyanate. As used herein, the term phase stable means that the isocyanate-reactive composition will not separate when stored for 7 days at about 70°F (or 21°C).

Many foam machines are designed to condition and mix only two components in the proper ratio. For use of these machines, a premix of all the components except the polyisocyanate can be advantageously employed. According to the two-component method (component A: polyisocyanate; and component B: isocyanate-reactive composition which typically includes the polyol, blowing agent, water, catalyst and surfactant), the components may be mixed in the proper ratio at a temperature of 5 to 50°C, such as 15 to 35°C, injected or poured into a mold having the temperature controlled to within a range of from 20 to 70°C, such as 35 to 60°C. The mixture then expands to fill the cavity with the rigid polyurethane foam. This simplifies the metering and mixing of the reacting components which form the foam-forming mixture, but requires that the isocyanate reactive composition be phase stable.

Alternatively, the rigid polyurethane foams may also be prepared by the so-called "quasi prepolymer" method in which a portion of the polyol is reacted in the absence of the urethane-forming catalysts with the polyisocyanate component in proportion so as to provide from 10 percent to 35 percent of free isocyanate groups in the reaction product based on the prepolymer. To prepare foam, the remaining portion of the polyol is added and the components are allowed to react together in the presence of the blowing agent and other appropriate additives such as the catalysts, and surfactants. Other additives may be added to either the isocyanate prepolymer or remaining polyol or both prior to the mixing of the components, whereby at the end of the reaction, rigid foam is provided.

Furthermore, the rigid foam can be prepared in a batch or continuous process by the one-shot or quasi-prepolymer methods using any well-known foaming apparatus. The rigid foam may be produced in the form of slab stock, moldings, cavity fillings, sprayed foam, frothed foam or laminates with other materials such as hardboard, plasterboard, plastics, paper or metal as facer substrates.

For closed-cell insulating foams, the object is to retain the blowing agent in the cells to maintain a low thermal conductivity of the insulating material, *i.e.,* the rigid foam. Thus, high closed-cell content in the foam is desirable. Foams produced according to implementations of the present specification have more than 80 percent, typically more than 85 percent, or more than 88 percent closed-cell content as measured according to ASTM D6226-15. Furthermore, it is theorized that foams produced according to various implementations of the present specification indicates can have acceptable insulating properties, i.e., the foams may have a thermal conductivity measured at 35°F (2°C) of less than 0.125 BTU-in/h-ft2-°F and measured at 75°F (24°C) of less than 0.140 BTU-in/h-ft2-°F for foam from the core of 2-inch thick panels, as measured according to ASTM C518-15.

This specification also relates to the use of the rigid foams described herein for thermal insulation. That is, the rigid foams of the present specification may find use as an insulating material in refrigeration apparatuses since the combination of good thermal insulation and other properties described herein is particularly appropriate here. The rigid foams according to the invention can be used, for example, as an intermediate layer in composite elements or for filling hollow spaces of refrigerators and freezers, or refrigerated trailers. The inventive foams may also find use in the construction industry or for thermal insulation of long-distance heating pipes and containers.

As such, this specification also relates to a composite article comprising rigid foam as disclosed herein sandwiched between one or more facer substrates. In certain implementations, the facer substrate may be plastic (such a polypropylene resin reinforced with continuous bi-directional glass fibers or a fiberglass reinforced polyester copolymer), paper, wood, or metal. For example, in certain implementations, the composite article may be a refrigeration apparatus such as a refrigerator, freezer, or cooler with an exterior metal shell and interior plastic liner. In certain implementations, the refrigeration apparatus may be a trailer, and the composite article may include the foams produced as described in this specification in sandwich composites for trailer floors.

It has been found, surprisingly, that isocyanate-reactive compositions described herein can exhibit a particularly desirable combination of shelf-life and flow properties. Specifically, the isocyanate-reactive compositions described herein can be phase stable and have a long shelf life. Here, when it is stated that the isocyanate-reactive composition has a "long" shelf life it means that after storing the isocyanate-reactive composition for 3-6 days (72-144 hours) at 60°C, when the isocyanate-reactive composition is combined with the polyisocyanate, both (a) the cream and gel times of the foam produced thereby remains within 10% of the initial cream and gel times (the cream and gel times of such a foam if produced immediately and not after storing the isocyanate-reactive composition for 15 days (360 hours) at 60°C) and (b) the free rise density foam produced thereby remains within 10% of the initial free rise density (the free rise density of such a foam is produced immediately and not after storing the isocyanate-reaction composition for 3-6 days (72-144 hours) at 60°C, even in cases where the isocyanate-reactive composition comprises 1.5-3% by weight of water and 9-13% by weight HCFO, based on the total weight of the isocyanate-reactive composition. In some cases, this initial gel time is 50 seconds, ± 6 seconds, which can be ideally suited for certain discontinuous panel and appliance applications. Third, it was determined that the cream and gel times and density for the foams could match that of a similar comparative formulation utilizing a hydrofluorocarbon blowing agent (HFC245fa). Lastly, it was found that rigid foams produced by the isocyanate-reactive components described herein afford drastically improved flow properties.

Various aspects of the subject matter described herein are set out in the following numbered clauses:
Clause 1. An isocyanate-reactive composition comprising: (a) an isocyanate-reactive compound, (b) a blowing agent composition comprising a hydrochlorofluoroolefin; and (c) a catalyst composition comprising a tertiary amine oxide.
Clause 2. The isocyanate-reactive composition of clause 1, wherein the isocyanate-reactive compound has an average of 1.8 to 8 or 2 to 6 isocyanate-reactive groups, such as NH-, OH-, COOH or -SH- groups.
Clause 3. The isocyanate-reactive composition of clause 1 or clause 2, wherein the isocyanate-reactive compound comprises a polyol, a polyamine, a (poly)aminoalcohol, a polythiol, or a mixture of any two or more thereof.
Clause 4. The isocyanate-reactive composition of clause 3, wherein the polyamine comprises ethylenediamine, 1,2- and 1,3-diaminopropane, 1,4-diaminobutane, 1,6-diaminohexane, isophoronediamine, isomer mixtures of 2,2,4- and 2,4,4-trimethylhexamethylenediamine, 2-methylpentamethylenediamine, diethylenetriamine, 1,3- and 1,4-xylylenediamine, α, α, α', α'-tetramethyl-1,3-und-1,4-xylylenediamine, 4,4-diaminodicyclohexylmethane, diethylmethylbenzenediamine (DETDA), 4,4'-diamino-3,3'-dichlorodiphenylmethane (MOCA), dimethylethylenediamine, 1,4-bis(aminomethyl)cyclohexane, 4,4'-diamino-3,3'-dimethyldicyclohexylmethane, 4,4'-diamino-3,5-diethyl-3',5'-diisopropyldicyclohexylmethane, or a mixture of any two or more of the foregoing.
Clause 5. The isocyanate-reactive composition of clause 3 or clause 4, wherein the polyamine comprises a polymeric polyamine, such as a polyoxyalkyleneamine.
Clause 6. The isocyanate-reactive composition of one of clause 3 to clause 5, wherein the aminoalcohol comprises N-aminoethylethanolamine, ethanolamine, 3-aminopropanol, neopentanolamine, diethanolamine, or a mixture of any two or more thereof.
Clause 7. The isocyanate-reactive composition of one of clause 3 to clause 6, wherein the polythiol comprises di(2-mercaptoethyl)ether, pentaaerythritoltetrakisthioglycolate, pentacrythritoltetrakis(3-mercaptopropionate), 1,2-bis((2-mercaptoethyl)thio)-3-mercaptopropane, or a mixture of any two or more thereof.
Clause 8. The isocyanate-reactive composition of one of clause 3 to clause 7, wherein the polyol has a number-average molecular weight (Mn) of 62 g/mol to 8000 g/mol, 90 g/mol to 5000 g/mol, or 92 g/mol to 1000 g/mol and/or an average OH functionality of at least 2, 2 to 6, 2.1 to 4, or 2.2 to 3.
Clause 9. The isocyanate-reactive composition of one of clause 3 to clause 8, wherein the polyol comprises a polyether polyol.
Clause 10. The isocyanate-reactive composition of clause 9, wherein the polyether polyol comprises an addition product of an alkylene oxide, such as styrene oxide, ethylene oxide, propylene oxide, butylene oxides, epichlorohydrin, or a mixture of any two or more thereof, onto di- or polyfunctional starter molecules, such as water, ethylene glycol, diethylene glycol, butyl diglycol, glycerol, diethylene glycol, trimethylolpropane, propylene glycol, pentaerythritol, sorbitol, sucrose, ethylenediamine, toluenediamine, triethanolamine, 1,4-butanediol, 1,6-hexanediol, a low molecular weight hydroxyl-containing ester of such polyols with dicarboxylic acids, or a mixture of any two or more thereof.
Clause 11. The isocyanates-reactive composition of one of clause 3 to clause 10, wherein the polyol comprises a polyester polyol.
Clause 12. The isocyanate-reactive composition of one of clause 3 to clause 11, wherein the polyol comprises a polycarbonate polyol.
Clause 13. The isocyanate-reactive composition of one of clause 3 to clause 12, wherein the polyol comprises a polyetherester polyol.
Clause 14. The isocyanate-reactive composition of one of clause 3 to clause 13, wherein the polyol comprises a polyacrylate polyol.
Clause 15. The isocyanate-reactive composition of one of clause 3 to clause 14, wherein the isocyanate-reactive composition comprises a blend of aromatic polyester polyol and polyester or polyether polyols that contain renewable content derived from incorporation of regenerable materials such as fatty acid triglycerides, sugars, or natural glycerin.
Clause 16. The isocyanate-reactive composition of one of clause 3 to clause 15, wherein the isocyanate-reactive compound comprises a saccharide-initiated polyether polyol.
Clause 17. The isocyanate-reactive composition of clause 16, wherein the saccharide-initiated polyether polyol comprises a reaction product of a saccharide, such as sucrose, with ethylene oxide and propylene oxide, wherein the ethylene oxide is used in an amount of 10 to 50% or 20 to 40% by weight of the total alkylene oxide used and the propylene oxide is used in an amount of 50 to 90% or 60 to 80% by weight of the total alkylene oxide used.
Clause 18. The isocyanate-reactive composition of clause 16 or clause 17, wherein the saccharide-initiated polyether polyol has an average molecular weight of 300 to 1600 Da or 440 to 1000 Da, an OH number of 200 to 600 mg KOH/g, 300 to 550 mg KOH/g, 350 to 450 mg KOH/g, or 450 to 500 mg KOH/g, and/or a functionality of 4 to 6, 5 to 6, 5.5 to 6.0, or 5.6 to 5.9.
Clause 19. The isocyanate-reactive composition of one of clause 16 to clause 18, wherein the saccharide-initiated polyether polyol is present in an amount of 10 to 90% by weight, 10 to 50% by weight, 10 to 30% by weight or 20 to 30% by weight, based on the total weight of polyols in the isocyanate-reactive composition.
Clause 20. The isocyanate-reactive composition of one of clause 3 to clause 19, wherein the isocyanate-reactive compound comprises an aromatic polyester polyol having an OH number of 150 to 410 mg KOH/g, 150 to 360 mg KOH/g, 200 to 335 mg KOH/g, or 200 to 250 mg KOH/g, and/or a functionality of 1.5 to 3 or 1.9 to 2.5.
Clause 21. The isocyanate-reactive composition of clause 20, wherein the aromatic polyester polyol is present in an amount of 30 to 80% weight, 30 to 60% by weight, 30 to 50% by weight or 40 to 50% by weight, based on the total weight of polyols in the isocyanate-reactive composition.
Clause 22. The isocyanate-reactive composition of clause 20 or clause 21, wherein the aromatic polyester polyol and the saccharide-initiated polyether polyol are present in the isocyanate-reactive composition in a weight ratio of at least 1:1, 1:1 to 8:1, 1:1 to 6:1, 1:1 to 4:1, or 1:1 to 2:1.
Clause 23. The isocyanate-reactive composition of one of clause 1 to clause 22, wherein the polyol comprises an amine-initiated polyether polyol having an OH number of at least 300 mg KOH/g, 300 to 900 mg KOH/g, 350 to 800 mg KOH/g, or 680 to 720 mg KOH/g, and a functionality of 2.5 to 4 or 2.5 to 3.5.
Clause 24. The isocyanate-reactive composition of clause 23, wherein the amine-initiated polyether polyol is present in an amount of 20 to 80%, 20 to 60% by weight, 30 to 50% by weight or 30 to 40% by weight, based on the total weight of isocyanate-reactive compounds present in the isocyanate-reactive composition.
Clause 25. The isocyanate-reactive composition of clause 23 or clause 24, wherein the amine-initiated polyether polyol and the aromatic polyester polyol are present in the isocyanate-reactive composition in a weight ratio of at least 1:1, 1:1 to 8:1, 1:1 to 6:1 or 1.5: to 2.5:1 and/or the amine-initiated polyether polyol and the saccharide-initiated polyether polyol are present in the isocyanate-reactive composition in a weight ratio of at least 0.5:1, 0.5:1 to 4:1, 1:1 to 2:1 or 1:1 to 1.5:1.
Clause 26. The isocyanate-reactive composition of one of clause 1 to clause 25, wherein the HCFO comprises 1-chloro-3,3,3-trifluoropropene (HCFO-1233zd, E and/or Z isomers), 2-chloro-3,3,3-trifluoropropene (HCFO-1233xf), HCFO1223, 1,2-dichloro-1,2-difluoroethene (E and/or Z isomers), 3,3-dichloro-3-fluoropropene, 2-chloro-1,1,1,4,4,4-hexafluorobutene-2 (E and/or Z isomers), 2-chloro-1,1,1,3,4,4,4-heptafluorobutene-2 (E and/or Z isomers).
Clause 27. The isocyanate-reactive composition of one of clause 1 to clause 26, wherein the boiling point, at atmospheric pressure, of the HCFO is at least -25°C, at least -20°C, at least -19°C, and 40°C or less, 35°C or less, or 33°C or less, such as -25°C to 40°C, or -20°C to 35°C, or -19°C to 33°C.
Clause 28. The isocyanate-reactive composition of one of clause 1 to clause 27, wherein the HCFO is present in an amount of at least 5% by weight, 5 to 30% by weight, 10 to 30% by weight, 15 to 25% by weight, or 18 to 22% by weight, based on the total weight of the isocyanate-reactive composition.
Clause 29. The isocyanate-reactive composition of one of clause 1 to clause 28, wherein the isocyanate-reactive composition comprises a CFC, HCFC, HFC, and/or a hydrocarbon blowing agent, such as butane, n-pentane, cyclopentane, hexane, and/or isopentane (i.e. 2-methylbutane).
Clause 30. The isocyanate-reactive composition of one of clause 1 to clause 28, wherein the isocyanate-reactive composition is substantially or completely free of CFCs, HCFCs, HFCs, and/or hydrocarbon blowing agents.
Clause 31. The isocyanate-reactive composition of one of clause 1 to clause 30, wherein the isocyanate-reactive composition comprises a carbon dioxide generating chemical blowing agent, such as water and/or formate-blocked amines, in which the carbon dioxide generating chemical blowing agent, such as water, is present in an amount of 0.5 to 5.0% by weight, 1 to 4% by weight, 2.0 to 4.0% by weight, or 3.0 to 4.0% by weight, based on the total weight of the isocyanate-reactive composition.
Clause 32. The isocyanate-reactive composition of clause 31, wherein the blowing agent composition comprises HCFO and a carbon dioxide generating chemical blowing agent, such as water, wherein the HCFO and the carbon dioxide generating chemical blowing agent are present in an amount of at least 90% by weight, at least 95% by weight, or at least 99% by weight, based on the total weight of the blowing agent composition.
Clause 33. The isocyanate-reactive composition of clause 31 or clause 32, wherein the HCFO and carbon dioxide generating chemical blowing agent are present in the blowing agent composition at a weight ratio of at least 1:1, at least 2:1, 2:1 to 10:1, 2:1 to 6:1, or 2:1 to 4:1.
Clause 34. The isocyanate-reactive composition of one of clause 1 to clause 33, wherein the isocyanate-reactive composition further comprises a surfactant that is present in an amount of 0.2 to 5.0% by weight, such as 1 to 3% by weight, based on the total weight of the isocyanate-reactive composition.
Clause 35. The isocyanate-reactive composition of one of clause 1 to clause 34, wherein the tertiary amine oxide catalyst has the structure (I): 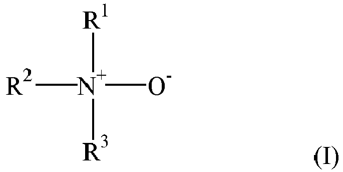 in which R¹, R² and R³ each independently represent a monovalent alkyl, cycloalkyl, aralkyl or heterocyclic radical, or wherein at least two of R¹, R² and R³ and the N-atom form a heterocyclic ring with or without other hetero atoms, such as oxygen, in the ring, and having up to 20 carbon atoms, such as triethyl amine-N-oxide.
Clause 36. The isocyanate-reactive composition of one of clause 1 to clause 35, wherein the tertiary amine oxide is a heterocylic tertiary amine oxide, such as an N-alkyl piperidine, an N-alkyl morpholine, an N-alkyl pyrrolidine, and/or an N,N'-dioxide of a N,N'-dialkylpiperazine.
Clause 37. The isocyanate-reactive composition of one of clause 1 to clause 36, wherein the tertiary amine oxide catalyst comprises dimethyldodecylamine N-oxide, benzyldimethylamine N-oxide, dimethyltetradecylamine N-oxide, diethylhexadecylamine N-oxide, methylethyloctadecylamine N-oxide, trimethylamine N-oxide, triethylamine N-oxide, diethylmethylamine N-oxide, dimethylethylamine N- oxide, tri-n-propylamine N-oxide, tri-n-butylamine N-oxide, tri-n-amylamine N-oxide, diisopropylethylamine N-oxide, diethylisopropylamine N-oxide, dimethyl-n-butylamine N-oxide, dimethylcyclohexylamine N-oxide, N-methylpiperidine N-oxide, N-ethylpiperidine N-oxide, N-propylpiperidine N-oxide, N-isopropylpiperidine N-oxide, N-n-butylpiperidine N-oxide, N-isobutylpiperidine N-oxide, N-isoamylpiperidine N-oxide, N-methyl-3-isopropylpiperidine N-oxide, 2-methyl-N,3-diethylpiperidine N-oxide, N-methylmorpholine N-oxide, N-hydroxyethylmorpholine, N,N-dimethylethanolamin N-oxide, N,N-dimethylpropanolamin N-oxide, N,N-dimethylhexanolamin N-oxide, N-oxide, diisopropylethylamine N-oxide, N-ethylmorpholine N-oxide, N-methylpyrrolidine N-oxide, N,N,N',N',N",N"-pentamethyldipropylenetriamine N-oxide, N,N'-dimethylpiperazine N,N' -dioxide, N,N'-diethylpiperazine N,N'-dioxide, N,N'-dipropylpiperazine N,N'-dioxide, N,N'-diisoamylpiperazine N,N'-dioxide, triethylenediamine N,N'-dioxide, N,N,N',N'-tetramethyltrimethylenediamine N,N'-dioxide, N,N,N',N'-tetraethyltrimethylenediamine N,N'-dioxide, N,N,N',N'-tetramethyltetramethylenediamme N,N'-di-oxide, N,N,N',N'-tetramethylhexamethylenediamine N,N'-di-oxide, the N-oxides of N,N-dimethylaminopropylurea, N,N,N',N'-tetramethyl-bis-aminopropylurea, bisdimethylaminoethylether, pentamethylethylenediamine, 2-[[2-[2-(dimethylamino)ethoxy]ethyl]methylamino]-ethanol, *N*¹-[2-[[2-(dimethylamino)ethyl]methylamino]ethyl]-*N*¹-methyl-1,3-propanediamine, and mixtures of any two or more thereof including the respective hydrates.
Clause 38. The isocyanate-reactive composition of one of clause 1 to clause 37, wherein the tertiary amine oxide catalyst comprises an aromatic tertiary amine oxide, such as a pyridine N-oxide, a quinoline N-oxide, or a isoquinoline N-oxide, such as those aromatic tertiary amine oxides having 5 to 18 carbon atoms, such as pyridine N-oxide, 3-chloropyridine N-oxide, 3.5-dibromopyridine N-oxide, 4-methylpyridine N-oxide, 3-ethylpyridine N-oxide, 2-methylpyridine N-oxide, 4-tert-butylpyridine N-oxide, 3-phenylpyridine N-oxide, 3-(p-isopropyl) benzylpyridine N-oxide, 4-p-isopropylphenethylpyridine N-oxide, 4-p-methoxyphenethylpyridine N-oxide, 3-benzhydrylpyridine N-oxide, quinoline N-oxide, 8-chloroquînoline N-oxide, 4-bromoquinoline N-oxide, 3-methylquinoline N-oxide, 4-ethylquinoline N-oxide, 7-isopropyiquinoline N-oxide, 5.6-henzoquinoline N-oxide, 6-chloro-4-methylquinoline N-oxide, isoquinoline N-oxide, 8-chloroisoquinoline N-oxide, 4-bromoisoquinoline N-oxide, 6-methylisoquinoline N-oxide, or a mixture of any two or more thereof.
Clause 39. The isocyanate-reactive composition of one of clause 1 to clause 38, wherein the tertiary amine oxide catalyst comprises a blend of an aromatic tertiary amine oxide and a (cyclo)aliphatic tertiary amine oxide.
Clause 40. The isocyanate-reactive composition of one of clause 1 to clause 39, wherein the tertiary amine oxide comprises two or more amine oxide groups or one or more amine oxide groups in combination with one or more other functional groups, such as amine and/or hydroxyl groups.
Clause 41. The isocyanate-reactive composition of one of clause 1 to clause 40, wherein the tertiary amine oxide is present in an amount of 0.01 to 5% by weight, 1 to 4% by weight or 2 to 4% by weight, based on the total weight of the isocyanate-reactive composition.
Clause 42. The isocyanate-reactive composition of one of clause 1 to clause 41, wherein the isocyanate-reactive composition comprises a tertiary amine catalyst comprising triethylenediamine (TEDA), dimethylcyclohexylamine (DMCHA), and dimethylethanolamine (DMEA), tetramethylbutanediamine (TMBDA), N-(3-dimethylaminopropyl)-N,N-diisopropanolamine, bis-(2-dimethylaminoethyl)ether, N-ethylmorpholine, triethylamine (TEA) and benzyldimethylamine (BDMA), or a mixture of any two or more thereof.
Clause 43. The isocyanate-reactive composition of one of clause 1 to clause 42, wherein the isocyanate-reactive composition comprises an oxygen-containing tertiary amine catalysts comprising an ether and/or a hydroxyl group, such as an alkanolamine, an ether amine, or a morpholine group-containing catalyst, such as an N-alkyl substituted morpholine.
Clause 44. The isocyanate-reactive composition of clause 43, wherein the oxygen-containing amine catalyst comprises a compound of the structure:

   R¹R²N(CH₂)₂X(CH₂)₂Y

   in which R¹ and R², which may be the same or different, are each a C₁-C₆ alkyl group, such as methyl, and/or an alkanol group, such as -CH₂CH₂OH or CH₂CH(CH₃)OH; X is O or NR³ and/or OH, where R³ is a C₁-C₆ alkyl group, such as methyl, or an alkanol group, such as -CH₂CH₂OH or CH₂-CH(CH₃)OH; and Y is OH or NR⁴R⁵, where R⁴ and R⁵, which may be the same or different, are each a C₁-C₆ alkyl group, such as methyl, and/or an alkanol group such as -CH₂CH₂OH or -CH₂CH(CH₃)OH; subject to the proviso that the compound contains at least one ether and/or hydroxyl group.
Clause 45. The isocyanate-reactive composition of clause 43 or clause 44, wherein the oxygen-containing amine catalyst comprises bis-(2-dimethylaminoethyl)ether; N,N-dimethylethanolamine; N-ethylmorpholine; N-methylmorpholine; N,N,N'-trimethyl-N'-hydroxyethyl-bisaminoethylether; N-(3-dimethylaminopropyl)-N,N-diisopropanolamine; N,N-bis(3-dimethylaminopropyl)-N-isopropanolamine; 2-(2-dimethylaminoethoxy)ethanol; N,N,N'-trimethylaminoethyl-ethanolamine; and 2,2'-dimorpholinodiethylether, or a mixture of any two or more thereof.
Clause 46. The isocyanate-reactive composition of one of clause 1 to clause 45, wherein the isocyanate-reactive composition comprises an amine catalyst comprising N-(3-dimethylaminopropyl)-N,N-diisopropanolamine, N,N-bis(3-dimethylaminopropyl)-N-isopropanolamine, 1,3-propanediamine, N'-(3-dimethylamino)propyl-N,N-dimethyl-, triethylenediamine, 1,2-dimethylimidazole, 1,3-propanediamine, N'-(3-(dimethylamino)propyl)-N,N-dimethyl-, N,N,N'N'-tetramethylhexanediamine, N,N",N"-trimethylaminoethylpiperazine, 1-methyl-4-(2-dimethylaminoethyl)piperazine, N,N,N',N'tetramethylethylenediamine, N,N-dimethylcyclohexylamine (DMCHA), Bis(N,N-dimethylaminoethyl)ether (BDMAFE), 1,4-diazabicyclo[2,2,2]octane (DABCO), 2-((2-dimethylaminoethoxy)-ethyl methyl-amino)ethanol, 1-(bis(3-dimethylamino)-propyl)amino-2-propanol, N,N',N"-tris(3-dimethylamino-propyl)hexahydrotriazine, 1,3,5-tris(3-(dimethylamino)propyl-hexahydro-s-triazine, dimorpholinodiethylether (DMDEE), N,N-dimethylbenzylamine, N,N,N',N",N"-pentaamethyldipropylenetriamine, N,N'-diethylpiperazine, dicyclohexylmethylamine, ethyldiisopropylamine, dimethylcyclohexylamine, dimethylisopropylamine, methylisopropylbenzylamine, methylcyclopentylbenzylamine, isopropyl-sec-butyl-trifluoroethylamine, diethyl-(a-phenyethyl)amine, tri-n-propylamine, dicyclohexylamine, t-butylisopropylamine, di-t-butylamine, cyclohexyl-t-butylamine, de-sec-butylamine, dicyclopentylamine, di-(α-trifluoromethylethyl)amine, di-(α-phenylethyl)amine, triphenylmethylamine, 1,1-diethyl-n-propylamine, or a mixture of any two or more and the hydrates thereof.
Clause 47. The isocyanate-reactive composition of one of clause 1 to clause 46, wherein the isocyanate-reactive composition comprises a morpholine, an imidazole, or an ether containing compounds, such as dimorpholinodiethylether, N-ethylmorpholine, N-methylmorpholine, bis(dimethylaminoethyl)ether, imidizole, n-methylimidazole, 1,2-dimethylimidazole, dimorpholinodimethylether, N,N,N',N',N",N"-pentamethyldipropylenetriamine, and bis(diethylaminoethyl)ether, bis(dimethylaminopropyl)ether, dimethylpiperazine, diethylaminopropylamine, ethylaminoethanol, diethylaminoethanol, isopropylaminoethanol, butylaminoethanol, dibutylaminoethanol, butyldiethanolamine, tert-butylaminoethanol, diethylhydroxylamine, or a mixture of any two or more thereof.
Clause 48. The isocyanate-reactive composition of one of clause 1 to clause 41, wherein the tertiary amine oxide catalyst is the only amine catalyst present in the isocyanate-reactive composition.
Clause 49. The isocyanate-reactive composition of one of clause 42 to clause 47, wherein any non-amine oxide amine catalyst is present in an amount of less than 2% by weight, 0.01 to 1.9% by weight, 0.01 to 1.0% by weight or 0.01 to 0.5% by weight, based on the total weight of the isocyanate-reactive composition.
Clause 50. The isocyanate-reactive composition of one of clause 1 to clause 49, wherein the isocyanate-reactive composition is substantially or completely free of organometallic gel catalyst.
Clause 51. A rigid foam comprising the reaction product of a reaction mixture comprising: (a) a polyisocyanate; and (b) the isocyanate-reactive composition of one of clause 1 to clause 50.
Clause 52. The rigid foam of clause 51, wherein the polyisocyanate comprises a methylene-bridged polyphenyl polyisocyanate and/or a prepolymer of methylene-bridged polyphenyl polyisocyanates having an average functionality of from 1.8 to 3.5 or 2.0 to 3.1, isocyanate moieties per molecule, and an NCO content of 25 to 32 weight percent.
Clause 53. The rigid foam of clause 51 or clause 52, wherein the rigid foam has a closed-cell content of more than 80 percent, more than 85 percent, or more than 88 percent, measured according to ASTM D6226-15.
Clause 54. The rigid foam of one of clause 51 to clause 53, wherein the rigid foam has a thermal conductivity measured at 35°F (2°C) of less than 0.125 BTU-in/h-ft²-°F and measured at 75°F (24°C) of less than 0.140 BTU-in/h-ft²-°F for foam from the core of 2-inch thick panels, as measured according to ASTM C518-15.
Clause 55. A refrigeration apparatus, a pipe, or container comprising the rigid foam of one of clause 51 to clause 54.
Clause 56. A composite article comprising the rigid foam of one of clause 51 to clause 54 sandwiched between one or more facer substrates, such as where the facer substrate comprises plastic, such a polypropylene resin reinforced with continuous bi-directional glass fibers or a fiberglass reinforced polyester copolymer, paper, wood, or metal.
Clause 57. A refrigeration apparatus, such as a refrigerator, freezer, or cooler comprising an exterior metal shell, interior plastic liner, and the rigid foam of one of clause 51 to clause 54 disposed therebetween.
Clause 58. A process for producing a rigid polyurethane or polyurethane-polyisocyanurate ("PUR-PIR") foam comprising mixing polyisocyanate with the isocyanate-reactive composition of one of clause 1 to clause 50 at an isocyanate index of from 90 to 150 or 120 to 150.

The non-limiting and non-exhaustive examples that follow are intended to further describe various non-limiting and non-exhaustive implementations without restricting the scope of the implementations described in this specification.

### EXAMPLES

Foam-forming compositions were prepared using the ingredients and amounts (in parts by weight) set forth in Table 1. The following materials were used:
POLYOL 1: an ortho-toluenediamine initiated polyether polyol (63% propylene oxide/37% ethylene oxide epoxide block) having an OH number of 378-398 mg KOH/g and an average functionality of 4;
POLYOL 2: a sucrose initiated polyether polyol having an OH number of about 380 mg KOH/g and a functionality of about 5.33, prepared by propoxylating a mixture of sucrose and water;
POLYOL 3: a modified aromatic polyester polyol having an OH number of about 240 mg KOH/g, commercially available as Stepanpol^{®} PS-2502A from Stepan Company;
SURFACTANT: silicone surfactant, VORASURF^{™} DC 5357 from The Dow Chemical Company;
CATALYST 1: N,N,N',N",N"-pentamethyldiethylenetriamine;
CATALYST 2: potassium 2-ethylhexanoate trimerization catalyst, commercially available as Dabco^{®} K-15;
CATALYST 3: N-methyl morpholine oxide
CATALYST 4: trimethylamine oxide
BA: trans-1,1,1-trifluoro-3-chloropropene, a hydrochlorofluoro olefin blowing agent which has a boiling poing of 19°C that is commercially available from Honeywell International Inc. as Solstice^{®} LBA.
ISOCYANATE: a high functionality polymeric diphenylmethane diisocyanate (PMDI) with a NCO content of 30.0 to 31.4% and a viscosity of 610 to 790 centipoise at 25°C.
CATALYST 5: cyclohexyldimethylamine N-oxide monohydrate prepared as follows:
   59.3 g ammonium hydrogen carbonate (0.75 moles) was dissolved in 385.5 g water. 170.1 g of a 30 weight-% solution of H₂O₂ in water (1.5 moles) was added to form ammonium hydrogen percarbonate. 38.16 g cyclohexyldimethylamine (0.3 moles) were added dropwise. The temperature was maintained between 15°C and 18°C with iced water. After stirring for two hours 0.25 g of platinum on charcoal were added. The mixture was stirred for 6 hours and filtered. The water was removed from the filtrate at 58°C and 50 mbar to yield the cyclohexyldimethylamine N-oxide monohydrate.
   NMR (CDCl₃ at 7.31 ppm, TMS at 0.0 ppm): 1.09-1.20 ppm (m, 1 H), 1.28-1.42 (th, 1.1Hz, 12.9 Hz, 4 H), 1.70 ppm (dm, 12.3 Hz, 1 H), 1.93-1.96 ppm (m, 2 H), 2.40-2.42 ppm (m, 2 H), 3.05 ppm (tt, 11.6 Hz, 3.4 Hz, 1H), 3.10 ppm (s, 6 H), 3.56 (s, hydrate water, 2.6 H).
CATALYST 6: benzyldimethylamine N-oxide monohydrate was prepared as follows:
   59.3 g ammonium hydrogen carbonate (0.75 moles) was dissolved in 385.5 g water. 170.1 g of a 30 weight-% solution of H₂O₂ in water (1.5 moles) were added to form ammonium hydrogen percarbonate. 40.56 g (0.3 moles) of benzyldimethylamine were added dropwise. The temperature was maintained between 15°C and 19°C with iced water. After stirring for four hours, 0.25 g of platinum on charcoal was added, further stirring took place for one hour and the mixture was filtered. The water was removed from the filtrate at 70°C and 10 mbar to yield 70.23 of an oily residue that crystallized over days.
   NMR (CDCl₃ at 7.26 ppm): 3.22 ppm (s, 6 H), 4.55 ppm (s, 2 H), 7.40-7.49 ppm (m, 5 H), 7.09 and 7.10 ppm (s, br, 1.15 H, hydrate water), 10.52 ppm (s, br, 2.5 H, hydrate water).
CATALYST 7: pentamethyldiethylenetriamine N-Oxide mixture of isomers was prepared as follows:
   19.75 g ammonium hydrogen carbonate (0.25 moles) were dissolved in 128.5 g water. 170.1 g of a 10 weight-% solution of H₂O₂ in water (0.5 moles) were added to form ammonium hydrogen percarbonate. 17.33 g (0.1 moles) of pentamethyldiethylenetriamine were added dropwise. The temperature was maintained between 15°C and 19°C with iced water. After stirring for four hours, 0.25 g of platinum on charcoal was added, further stirring took place for one hour and the mixture was filtered. The water was removed from the filtrate at 65°C and 10 mbar to yield 12.3 of an oily residue.
CATALYST 8: diisopropylethylamine N-Oxide was prepared as follows:
   19.75 g ammonium hydrogen carbonate (0.25 moles) were dissolved in 128.5 g water. 170.1 g of a 10 weight-% solution of H₂O₂ in water (0.5 moles) were added to form ammonium hydrogen percarbonate. 12.93 g (0.1 moles) of diisopropyolethylamine "Hünig's base" were added dropwise. The temperature was maintained between 15°C and 19°C with iced water. After stirring for four hours, 0.25 g of platinum on charcoal was added, further stirring took place for one hour and the mixture was filtered. The water was removed from the filtrate at 65°C and 10 mbar to yield 8.85 of an oily residue.
   NMR (d6-DMSO), 1.31 ppm (t, 7.4 Hz, 3 H), 1.39 ppm (d, 6.6 Hz, 6 H), 1.44 ppm (d, 6.6 Hz, 6 H), 3.41 ppm (q, 7.4 Hz, 2 H); 3.80 ppm (sept, 6.6 Hz, 2 H).
CATALYST 9: *N*-[3-(dimethylamino)propyl]-urea N-Oxide was prepared as follows:
   59.3 g ammonium hydrogen carbonate (0.75 moles) were dissolved in 128.5 g water. 170.1 g of a 30 weight-% solution of H₂O₂ in water (1.5 moles) were added to form ammonium hydrogen percarbonate. 48.18 g of Dabco 1070 (Evonik) were added dropwise. The temperature was maintained between 15°C and 19°C with iced water. After stirring for four hours, 0.25 g of platinum on charcoal was added, further stirring took place for one hour and the mixture was filtered. The water was removed from the filtrate at 65°C and 10 mbar to yield 52.98 g of an oily residue that was diluted with water to 74.57 g of aqueous solution. For analytical purposes 5 g of this solution was dehydrated by evaporation.
   NMR (CDC13 at 7.26 ppm): 2.09 ppm (q, 6.8 Hz, 2 H), 3.19 and 3.20 (2 singuletts, Integral 1:5, 6 H), the following signals are overlaps of product and unknown glycols used as solvent in Dabco NE1070: 3.38 ppm (t, 7.1 Hz), 3.60-3.64 ppm (m, 3.6 H), 3.67-3.69 ppm (m, 6.9 H), 3.72-3.76 ppm (m, 3.7 H).

In each case, a master batch was prepared by mixing the polyols, catalysts, surfactant, water and blowing agents in the amounts indicated in Table 1. Foams were prepared by mixing 100 parts by weight of the masterbatch with 115 parts by weight of ISOCYANATE and pouring the mixture into an 83 ounce paper cup. The cream time, gel time, and free rise density ("FRD") were recorded. Results are set forth in Table 2 (reported results represent the average results of three replicated experiments). Flow was evaluated as described in U.S. Patent No. 10,106,641 (at col. 12, lines 22-61, the cited portion of which being incorporated herein by reference) and the results are set forth in Table 3. Additionally, a pressure transducer was located 10 cm above the protruding sheet metal based edge, which recorded the foaming pressure during the process. The rise rate was derived from the foam height data as a function of time.

**Table 1**

| Material | Example 1 (comparative) | Example 2 | Example 3 |
|---|---|---|---|
| POLYOL 1 | 33.04 | 33.04 | 33.04 |
| POLYOL 2 | 22.12 | 22.12 | 21.97 |
| POLYOL 3 | 18.36 | 18.36 | 18.36 |
| SURFACTANT | 2.90 | 2.90 | 2.90 |
| CATALYST 1 | 0.90 | - | - |
| CATALYST 3 | - | 0.90 | - |
| CATALYST 4 | - | - | 1.05 |
| CATALYST 2 | 0.90 | 0.90 | 0.90 |
| Water | 1.70 | 1.70 | 1.70 |
| BA | 20.08 | 20.08 | 20.08 |
| TOTAL | 100 | 100 | 100 |

**Table 2**

| Example | Time (days) | Cream (s) | % Change | Gel (s) | % Change | Free-Rise Density (pcf) | % Change |
|---|---|---|---|---|---|---|---|
| 1 | 0 | 8 | - | 56 | - | 1.53 | - |
| | 20¹ | 12 | 50 | 61 | 9 | 1.57 | 3 |
| | 30¹ | 13 | 63 | 60 | 7 | 1.63 | 7 |
| 2 | 0 | 18 | - | 49 | - | 1.63 | - |
| | 1² | 18 | 0 | 51 | 4 | 1.71 | 5 |
| | 3² | 18 | 0 | 53 | 8 | 1.60 | -2 |
| | 6² | 18 | 0 | 55 | 12 | 1.60 | -2 |
| 3 | 0 | 14 | - | 49 | - | 1.44 | - |
| | 1² | 14 | 0 | 49 | 0 | 1.47 | 2 |
| | 3² | 15 | 7 | 54 | 10 | 1.46 | 1 |
| | 6² | 18 | 29 | 66 | 35 | 1.60 | 11 |

| | | | | | | | |
|---|---|---|---|---|---|---|---|
| ¹ Shelf-life aged at room temperature. 20 days at room temperature corresponds to 0.7 days of accelerated shelf-life aging at 60°C. ² Accelerated shelf-life aging at 60°C. | | | | | | | |

**Table 3**

| Example | Time (days) | Final Height (cm) | Max. Pressure (hPa) | Max. Rise Rate (cm/s) |
|---|---|---|---|---|
| 1 | 0 | 105 | 93 | 2.8 |
| 2 | 0 | 101 | 167 | 4.1 |
| | 1 | 99 | 183 | 3.9 |
| | 3 | 104 | 160 | 3.9 |
| | 6 | 104 | 148 | 3.7 |
| 3 | 0 | 112 | 161 | 5.1 |
| | 1 | 108 | 167 | 4.8 |
| | 3 | 109 | 120 | 4.7 |
| | 6 | 93 | 76 | 3.5 |

Erosion of foam quality was observed after 4 weeks (20 days) of room temperature shelf-life aging of Example 1 in addition to the drastic shift in cream time. After 6 days of aging, Example 2 still provided very comparable flow (see Flow data) to that of the initial control even though the gel time had increased by 12%. Example 3 exhibited a slight loss in flow after 6 days of accelerated aging, which correlates to changes in reactivity observed in hand-mix bucket foam. Higher max pressure values were generally observed for Examples 2 and 3 (likely due to the much higher rise rates), however, this is within the acceptable range of usage and not believed to be problematic.

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. An isocyanate-reactive composition comprising:
(a) an isocyanate-reactive compound;
(b) a blowing agent composition comprising a hydrochlorofluoroolefin; and
(c) a catalyst composition comprising a tertiary amine oxide.

2. The isocyanate-reactive composition of claim 1, wherein the isocyanate-reactive compound comprises a polyether polyol with a number-average molecular weight of 62 g/mol to 8000 g/mol and an average OH functionality of 2 to 6.

3. The isocyanate-reactive composition of claim 2, wherein the polyol further comprises a polyester polyol.

4. The isocyanate-reactive composition of claim 2 or claim 3, wherein the polyether polyol comprises a saccharide-initiated polyether polyol having an average molecular weight of 300 to 1600 Da, an OH number of 200 to 600 mg KOH/g, and a functionality of 4 to 6; and/or wherein the polyether polyol comprises an amine-initiated polyether polyol having an OH number of at least 300 mg KOH/g and a functionality of 2.5 to 4.

5. The isocyanate-reactive composition of claim 3, wherein the polyester polyol comprises an aromatic polyester polyol having an OH number of 150 to 410 mg KOH/g and a functionality of 1.5 to 3.

6. The isocyanate-reactive composition of any one of claims 1 to 5, wherein the isocyanate-reactive compound comprises an amine-initiated polyether polyol, a saccharide-initiated polyether polyol, and an aromatic polyester polyol, wherein the amine-initiated polyether polyol and the aromatic polyester polyol are present in the isocyanate-reactive composition in a weight ratio of at least 1:1 and the amine-initiated polyether polyol and the saccharide-initiated polyether polyol are present in the isocyanate-reactive composition in a weight ratio of at least 0.5:1.

7. The isocyanate-reactive composition of any one of claims 1 to 6, wherein the hydrochlorofluoroolefin comprises 1-chloro-3,3,3-trifluoropropene, preferably in an amount of 10 to 30% by weight, based on the total weight of the isocyanate-reactive composition.

8. The isocyanate-reactive composition of any one of claims 1 to 7, wherein the blowing agent composition comprises a carbon dioxide generating chemical blowing agent present in an amount of 0.5 to 5.0% by weight, based on the total weight of the isocyanate-reactive composition.

9. The isocyanate-reactive composition of claim 8, wherein the combined amount of hydrochlorofluoroolefin and carbon dioxide generating chemical blowing agent is at least 90% by weight, based on the total weight of the blowing agent composition, and/or, wherein the hydrochlorofluoroolefin and carbon dioxide generating chemical blowing agent are present in the blowing agent composition at a weight ratio of at least 1:1.

10. The isocyanate-reactive composition of any one of claims 1 to 9, wherein the tertiary amine oxide has the structure: 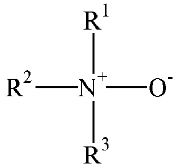 in which R¹, R² and R³ each independently represent a monovalent alkyl, cycloalkyl, aralkyl or heterocyclic radical, or wherein at least two of R¹, R² and R³ and the N-atom form a heterocyclic ring with or without other hetero atoms in the ring, and having up to 20 carbon atoms.

11. The isocyanate-reactive composition of claim 10, wherein the tertiary amine oxide comprises dimethyldodecylamine N-oxide, benzyldimethylamine N-oxide, dimethyltetradecylamine N-oxide, diethylhexadecylamine N-oxide, methylethyloctadecylamine N-oxide, trimethylamine N-oxide, triethylamine N-oxide, diethylmethylamine N-oxide, dimethylethylamine N- oxide, tri-n-propylamine N-oxide, tri-n-butylamine N-oxide, tri-n-amylamine N-oxide, diisopropylethylamine N-oxide, diethylisopropylamine N-oxide, dimethyl-n-butylamine N-oxide, dimethylcyclohexylamine N-oxide, N-methylpiperidine N-oxide, N-ethylpiperidine N-oxide, N-propylpiperidine N-oxide, N-isopropylpiperidine N-oxide, N-n-butylpiperidine N-oxide, N-isobutylpiperidine N-oxide, N-isoamylpiperidine N-oxide, N-methyl-3-isopropylpiperidine N-oxide, 2-methyl-N,3-diethylpiperidine N-oxide, N-methylmorpholine N-oxide, N-hydroxyethylmorpholine, N,N-dimethylethanolamin N-oxide, N,N-dimethylpropanolamin N-oxide, N,N-dimethylhexanolamin N-oxide, N-oxide, diisopropylethylamine N-oxide, N-ethylmorpholine N-oxide, N-methylpyrrolidine N-oxide, N,N,N',N',N",N"-pentamethyldipropylenetriamine N-oxide, N,N'-dimethylpiperazine N,N' -dioxide, N,N'-diethylpiperazine N,N'-dioxide, N,N'-dipropylpiperazine N,N'-dioxide, N,N'-diisoamylpiperazine N,N'-dioxide, triethylenediamine N,N'-dioxide, N,N,N',N'-tetramethyltrimethylenediamine N,N'-dioxide, N,N,N',N'-tetraethyltrimethylenediamine N,N'-dioxide, N,N,N',N'-tetramethyltetramethylenediamme N,N'-di-oxide, N,N,N',N'-tetramethylhexamethylenediamine N,N'-di-oxide, the N-oxides of N,N-dimethylaminopropylurea, N,N,N',N'-tetramethyl-bis-aminopropylurea, bisdimethylaminoethylether, pentamethylethylenediamine, 2-[[2-[2-(dimethylamino)ethoxy]ethyl]methylamino]-ethanol, *N*¹-[2-[[2-(dimethylamino)ethyl]methylamino]ethyl]-*N*¹-methyl-1,3-propanediamine, or a mixture of any two or more thereof, as well as a hydrate of any thereof.

12. The isocyanate-reactive composition of claim 10, wherein the tertiary amine oxide comprises an N-alkyl morpholine oxide and/ortrimethylamine N-oxide.

13. The isocyanate-reactive composition of any one of claims 1 to 12, wherein the tertiary amine oxide is present in an amount of 0.01 to 5% by weight, based on the total weight of the isocyanate-reactive composition.

14. A rigid foam comprising the reaction product of a reaction mixture comprising: (a) a polyisocyanate; and (b) the isocyanate-reactive compound of the isocyanate-reactive composition of any one of claims 1 to 13.

15. A process for producing a rigid polyurethane or polyurethane-polyisocyanurate foam comprising mixing polyisocyanate with the isocyanate-reactive composition of any one of claims 1 to 13 at an isocyanate index of 90 to 150.
